# FASCICULE DE BREVET EUROPEEN

(11) **EP 2 221 547 B1**
(45) Date de publication et mention de la délivrance du brevet: **05.10.2011**
(21) Numéro de dépôt: 10153944.3
(22) Date de dépôt: 18.02.2010
(51) Int. Cl.: F24F 3/044, F24F 5/00

(54) **Installation de chauffage et de refroidissement d'un bâtiment**
Heiz- und Kühlanlage eines Gebäudes
Installation for heating and cooling a building

(30) Priorité: 24.02.2009 FR 0951147
(43) Date de publication de la demande: 25.08.2010
(73) Titulaire: Australair, 38280 Janneyrias (FR)
(72) Inventeur: Gras, André, 38280 Janneyrias (FR)
(74) Mandataire: Maureau, Philippe

(56) Documents cités:
- WO-A-2006/024066
- WO-A-2007/009169
- US-A1- 2005 268 636

## Description

La présente invention concerne une installation de chauffage et de refroidissement d'un bâtiment.

Le document WO 2007/009169 décrit une installation de chauffage et de refroidissement d'un bâtiment comprenant un dispositif de refroidissement par évaporation raccordé, par une manchette de raccordement, à un conduit intermédiaire logeant un ventilateur, le conduit intermédiaire étant raccordé en aval du ventilateur à une canalisation d'insufflation d'air agencée pour insuffler l'air provenant du ventilateur dans au moins une pièce du bâtiment. L'installation comprend en outre une canalisation de reprise d'air raccordée au conduit intermédiaire en amont du ventilateur et agencée pour rediriger l'air provenant de ladite pièce du bâtiment vers le conduit intermédiaire, et des moyens de chauffage logés dans la canalisation de reprise d'air. L'installation comprend de plus un dispositif de régulation disposé en amont du ventilateur et mobile entre une première position permettant un écoulement d'air uniquement du dispositif de refroidissement par évaporation vers le canalisation d'insufflation et une seconde position permettant un écoulement d'air uniquement de la canalisation de reprise d'air vers la canalisation d'insufflation.

Ainsi, l'installation décrite dans le document WO 2007/009169 assure, en fonction de la position des moyens de régulation, un refroidissement ou un chauffage d'un bâtiment sans nécessiter l'utilisation d'une pompe à chaleur réversible présentant un coût et une consommation électrique élevés.

Cependant, les coûts d'une telle installation restent encore élevés du fait notamment du nombre important de pièces à raccorder qui augmente le temps de montage de ladite installation.

La présente invention vise à remédier à ces inconvénients.

Le problème technique à la base de l'invention consiste donc à fournir une installation de chauffage et de refroidissement d'un bâtiment qui soit de structure simple et économique.

A cet effet, l'invention concerne une installation de chauffage et de refroidissement d'un bâtiment selon la revendication 1.

La disposition du dispositif de refroidissement par évaporation dans un caisson dans lequel débouchent respectivement le conduit d'insufflation d'air et le conduit de reprise d'air permet de limiter le nombre de pièces à raccorder, ce qui diminue le temps de montage de l'installation et donc son coût.

En outre, la disposition du dispositif de refroidissement par évaporation dans un tel caisson permet d'humidifier l'air insuffler dans la pièce du bâtiment aussi bien en mode chauffage qu'en mode refroidissement, ce qui peut être bénéfique dans certains domaines d'activité, tels que l'imprimerie.

Avantageusement, les moyens de commande comportent un boîtier de commande agencé pour commander le fonctionnement du dispositif de refroidissement par évaporation, des moyens de chauffage et des premiers et seconds moyens d'obturation.

Selon une caractéristique de l'invention, le dispositif de refroidissement par évaporation comporte un ventilateur, au moins un élément de refroidissement et des moyens d'humidification de l'élément de refroidissement, le ventilateur étant agencé pour diriger le flux d'air entrant par l'ouverture d'entrée d'air et/ou l'ouverture de reprise d'air vers l'ouverture de sortie d'air de telle sorte que ce flux d'air traverse l'élément de refroidissement avant d'être dirigé vers l'ouverture de sortie d'air.

Avantageusement, lorsque les moyens de chauffage fonctionnent, les moyens de commande sont agencés pour réguler la vitesse de rotation du ventilateur en fonction de la température mesurée par les deuxièmes moyens de mesure.

De préférence, les moyens de commande sont agencés pour augmenter la vitesse de rotation du ventilateur lorsque la température mesurée par les deuxièmes moyens de mesure dépasse une valeur prédéterminée, et inversement. Les moyens de chauffage fonctionnant avantageusement un mode tout ou rien, ces dispositions assurent un transfert thermique optimisé des moyens de chauffage vers la pièce du bâtiment.

Selon une caractéristique de l'invention, les moyens de commande sont agencés pour commander l'alimentation des moyens de chauffage lorsque la température mesurée par les premiers moyens de mesure est inférieure à une valeur prédéterminée.

Préférentiellement, les moyens de commande sont agencés pour déplacer les premiers et seconds moyens d'obturation entre leurs positions d'obturation et de libération en fonction de la température mesurée par les premiers et/ou deuxièmes moyens de mesure.

De préférence, les moyens de commande sont agencés pour commander le fonctionnement des moyens d'humidification en fonction de la température mesurée par les premiers moyens de mesure et/ou en fonction de l'hygrométrie mesurée par les troisièmes moyens de mesure.

Avantageusement, les moyens de chauffage comprennent au moins un échangeur thermique tubulaire chauffé par l'intérieur à l'aide d'au moins un brûleur à gaz. Ces dispositions permettent de diminuer les pertes de charge au niveau des moyens de chauffage.

De façon préférentielle, les premiers et/ou seconds moyens d'obturation comportent au moins un volet monté pivotant entre une position d'obturation et une position de libération.

Il convient de noter que l'installation selon l'invention permet de réaliser un chauffage d'une pièce d'un bâtiment avec le même taux de brassage d'air que pour un rafraîchissement de cette dernière, c'est-à-dire avec un taux de deux à trois fois supérieur à celui de l'aérothermie classique.

De toute façon l'invention sera bien comprise à l'aide de la description qui suit en référence au dessin schématique annexé représentant, à titre d'exemple non limitatif, une forme d'exécution de cette installation de chauffage et de refroidissement.
Figure 1 est une vue schématique d'une installation de chauffage et de refroidissement selon l'invention dans un premier mode de fonctionnement.
Figure 2 est une vue schématique de l'installation de chauffage et de refroidissement de figure 1 dans un deuxième mode de fonctionnement.
Figure 3 est une vue schématique des moyens de commande de l'installation de figure 1.

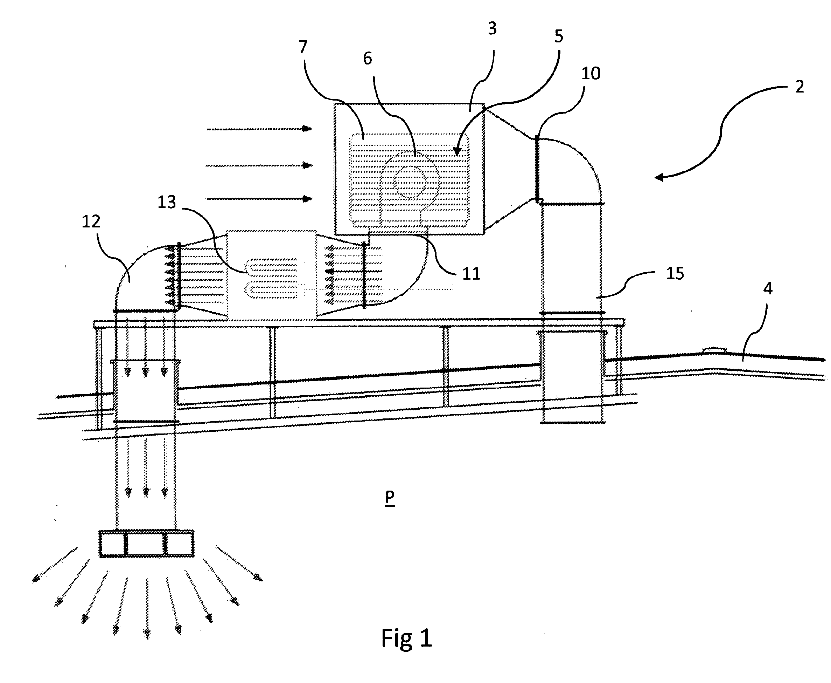

Les figures 1 à 3 représentent une installation de chauffage et de refroidissement 2 d'un bâtiment.

L'installation de chauffage et de refroidissement 2 comprend un caisson métallique 3 installé sur la toiture 4 ou la terrasse du bâtiment et dans lequel est logé un dispositif de refroidissement par évaporation 5.

Le dispositif de refroidissement par évaporation 5 comporte un ventilateur 6, des filtres de refroidissement (non représentés sur les figures) disposés autour du ventilateur 6, et des moyens d'humidification des filtres de refroidissement (non représentés sur les figures). De préférence, le ventilateur, les filtres de refroidissement et les moyens d'humidification sont logés dans un carter 7, de préférence en matière plastique, muni de fentes d'entrée d'air.

Les moyens d'humidification comportent de façon connue un réservoir d'eau disposé en dessous des filtres de refroidissement et alimenté en eau à partir d'un conduit d'alimentation 8, un dispositif de distribution d'eau disposé au dessus des filtres de refroidissement et agencé pour permettre un écoulement d'eau par gravité sur les filtres de refroidissement, et une pompe agencée pour alimenter en eau le dispositif de distribution d'eau à partir d'eau contenue dans le réservoir.

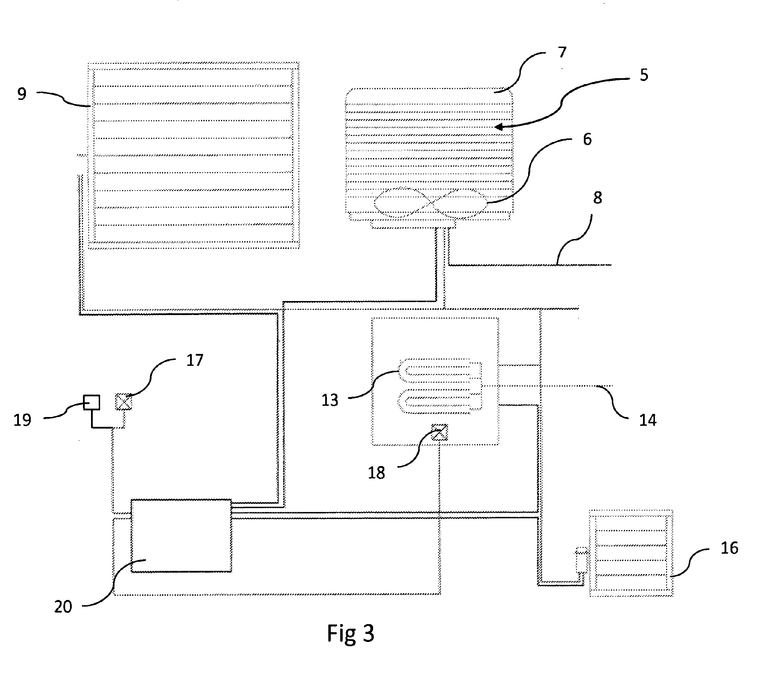

Le caisson 3 est sensiblement parallélépipédique et comporte trois ouvertures latérales d'entrée d'air (non représentées sur les figures) communiquant avec l'extérieur du bâtiment. Chaque ouverture d'entrée d'air est ménagée sur l'une des faces latérales du caisson 3. Comme montré sur la figure 3, chaque ouverture d'entrée d'air est équipée de volets d'obturation 9 montés pivotant entre une position d'obturation de ladite ouverture d'entrée d'air et une position de libération de cette dernière dans laquelle un flux d'air peut traverser ladite ouverture et pénétrer à l'intérieur du caisson 3.

Le caisson 3 comporte en outre une ouverture latérale 10 de reprise d'air et une ouverture inférieure 11 de sortie d'air.

Le ventilateur 6 du dispositif de refroidissement par évaporation 5 est agencé pour diriger un flux d'air entrant par l'une des ouvertures d'entrée d'air et/ou l'ouverture de reprise d'air 10 vers l'ouverture de sortie d'air 11 de telle sorte que ce flux d'air traverse au moins l'un des filtres de refroidissement avant d'être dirigé vers l'ouverture de sortie d'air.

L'installation de chauffage et de refroidissement 2 comprend de plus une canalisation d'insufflation d'air 12 raccordée à l'ouverture de sortie d'air 10 et agencée pour insuffler l'air provenant du caisson 3 dans au moins une pièce P du bâtiment.

L'installation de chauffage et de refroidissement 2 comprend également des moyens de chauffage disposées dans la canalisation d'insufflation d'air 12. Les moyens de chauffage comprennent de préférence au moins un échangeur thermique à tube 13 chauffé par l'intérieur à l'aide d'au moins un brûleur à gaz alimenté en gaz par une conduite d'alimentation 14. Avantageusement, l'échangeur thermique à tube 13 est réalisé en acier inoxydable.

L'installation de chauffage et de refroidissement 2 comprend en outre une canalisation de reprise d'air 15 raccordée à l'ouverture de reprise d'air 10 du caisson 3 et agencée pour rediriger l'air provenant de ladite pièce P du bâtiment vers le caisson3.

Comme montré sur la figure 3, la canalisation de reprise d'air 15 comporte des volets d'obturation 16 montés pivotant entre une position d'obturation de ladite canalisation et une position de libération de cette dernière dans laquelle un flux d'air peut traverser ladite canalisation et pénétrer à l'intérieur du caisson 3.

L'installation de chauffage et de refroidissement 2 comprend des premiers moyens de mesure 17 agencés pour mesurer la température de l'air dans ladite pièce P du bâtiment, des deuxièmes moyens de mesure 18 agencés pour mesurer la température de l'air au niveau des moyens de chauffage, et des troisièmes moyens de mesure 19 agencés pour mesurer l'hygrométrie dans ladite pièce P du bâtiment.

L'installation de chauffage et de refroidissement 2 comprend des moyens de commande du dispositif de refroidissement par évaporation 5, des moyens de chauffage 13 et des premiers et seconds moyens d'obturation 9, 16.

Comme montré sur la figure 3, les moyens de commande comportent un boîtier de commande 20 agencé pour commander l'alimentation électrique du ventilateur 6 et de la pompe du dispositif de refroidissement par évaporation 5, l'alimentation en gaz et l'allumage du brûleur à gaz des moyens de chauffage, et les déplacements des volets d'obturation 9, 16 entre leurs positions d'obturation et de libération. Le boîtier de commande 20 est également agencé pour réguler la vitesse de rotation du ventilateur 6.

Les moyens de commande sont agencés pour déplacer les volets d'obturation 9, 16 entre leurs positions d'obturation et de libération en fonction notamment de la température mesurée par les premiers et/ou deuxièmes moyens de mesure 17, 18 et/ou en fonction de l'hygrométrie mesurée par les troisièmes moyens de mesure 19.

De plus, lorsque les moyens de chauffage fonctionnent, les moyens de commande sont agencés pour réguler la vitesse de rotation du ventilateur 6 en fonction de la température mesurée par les deuxièmes moyens de mesure 18. Avantageusement, les moyens de commande sont agencés pour augmenter par palier la vitesse de rotation du ventilateur 6 lorsque la température mesurée par les deuxièmes moyens de mesure 18 dépasse respectivement différentes valeurs prédéterminées, et inversement.

Avantageusement, lorsque les moyens de chauffage ne fonctionnent pas, les moyens de commande sont agencés pour réguler la vitesse de rotation du ventilateur 6 en fonction de la température mesurée par les premiers moyens de mesure 17 et/ou ou de l'hygrométrie mesurée par les troisièmes moyens de mesure 19.

Les moyens de commande sont également agencés pour commander le fonctionnement de la pompe des moyens d'humidification en fonction de la température mesurée par les premiers moyens de mesure 17 et/ou de l'hygrométrie mesurée par les troisièmes moyens de mesure 19.

Les moyens de commande sont de plus agencés pour commander le fonctionnement du brûleur à gaz 13 des moyens de chauffage en fonction de la température mesurée par les premiers moyens de mesure 17.

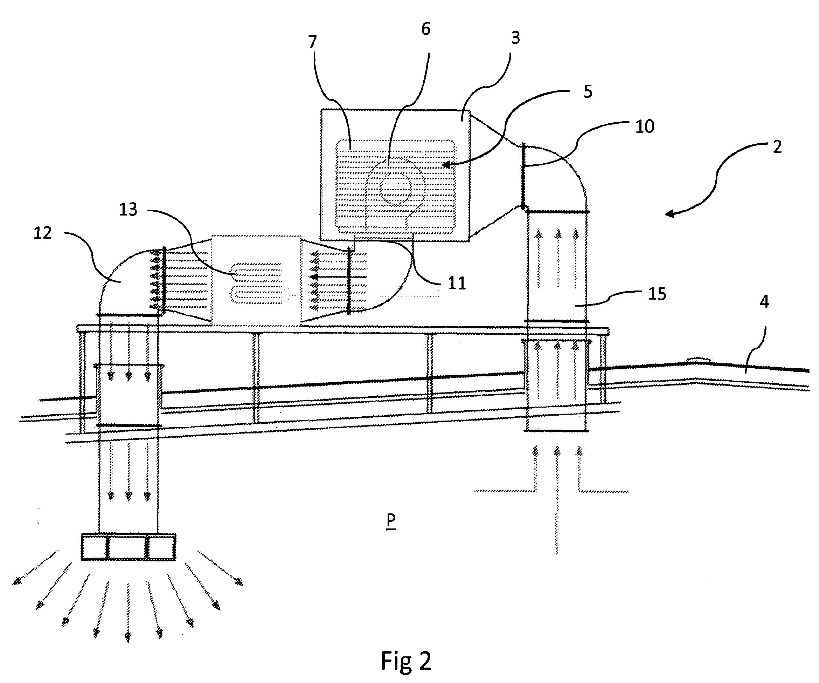

Selon un mode de réalisation de l'invention représenté sur les figures 1 et 2, les moyens de commande sont agencés d'une part pour commander l'alimentation en gaz et l'allumage du brûleur à gaz des moyens de chauffage lorsque la température mesurée par les premiers moyens de mesure 17 est inférieure à une première valeur prédéterminée, et inversement, et d'autre part pour alimenter électriquement la pompe des moyens d'humidification du dispositif de refroidissement par évaporation 5 lorsque la température mesurée par les premiers moyens de mesure 17 est supérieure à une seconde valeur prédéterminée, et inversement.

En outre, selon ce mode de réalisation de l'invention, les moyens de commande sont agencés pour déplacer les volets d'obturation 9 dans leur position d'obturation et les volets d'obturation 16 dans leur position de libération lorsque la température mesurée par les premiers moyens de mesure 17 est inférieure à la première valeur prédéterminée, et pour déplacer les volets d'obturation 9 dans leur position de libération et les volets d'obturation 16 dans leur position d'obturation lorsque la température mesurée par les premiers moyens de mesure 17 est supérieure à la seconde valeur prédéterminée.

Ainsi, lorsque la température dans la pièce P dépasse la seconde valeur prédéterminée, les moyens de commande d'une part déplacent les volets d'obturation 9 dans leur position de libération et les volets d'obturation 16 dans leur position d'obturation, et d'autre part alimentent électriquement la pompe des moyens d'humidification de telle sorte que les filtres de refroidissement soient humidifiés. Dans ce cas de figure, l'installation fonctionne en mode refroidissement.

Comme montré sur la figure 1, en mode refroidissement, seul un flux d'air provenant de l'extérieur du bâtiment peut pénétrer dans le caisson 3 en traversant les ouvertures d'entrée d'air du caisson. Ce flux d'air est dirigé par le ventilateur 6 du dispositif de refroidissement par évaporation 5 vers l'ouverture de sortie d'air 11 de telle sorte que ce flux d'air traverse les filtres de refroidissement humidifiés avant d'être dirigé vers l'ouverture de sortie d'air 11.

Lors du passage du flux d'air à travers les filtres de refroidissement, une quantité de l'eau retenue par les filtres de refroidissement s'évapore, ce qui provoque une diminution de la température de l'air traversant les filtres et une augmentation de l'hygrométrie de ce dernier.

Ce flux d'air humidifié et rafraichi est ensuite insufflé dans la pièce P du bâtiment par l'intermédiaire de la canalisation d'insufflation d'air 12, ce qui entraîne une diminution de la température de la pièce P.

Bien entendu, le flux d'air n'est pas réchauffé par les moyens de chauffage qui ne fonctionnent pas en mode refroidissement.

Lorsque la température dans la pièce P descend en dessous de la première valeur prédéterminée, les moyens de commande d'une part déplacent les volets d'obturation 9 dans leur position d'obturation et les volets d'obturation 16 dans leur position de libération, et d'autre part commande l'alimentation en gaz et l'allumage du brûleur à gaz des moyens de chauffage. Dans ce cas de figure, l'installation fonctionne en mode chauffage.

Comme montré sur la figure 2, en mode chauffage, seul un flux d'air provenant de la pièce P du bâtiment peut pénétrer dans le caisson 3 par l'intermédiaire de la canalisation de reprise d'air 15. En mode chauffage, le ventilateur 6 du dispositif de refroidissement par évaporation fonctionne et dirige ce flux d'air en direction de l'ouverture de sortie d'air 11 de telle sorte que ce dernier traverse les filtres de refroidissement avant d'être dirigé vers l'ouverture de sortie d'air 11. En mode chauffage, la pompe des moyens d'humidification ne fonctionne pas, les filtres de refroidissement ne sont donc pas humidifiés et n'entraînent de ce fait pas une diminution de la température du flux d'air les traversant.

Puis, ce flux d'air traverse les moyens de chauffage afin d'être réchauffé par l'intermédiaire de l'échangeur thermique 13 chauffé par l'intérieur à l'aide du brûleur à gaz associé.

Le flux d'air réchauffé est ensuite insufflé dans la pièce P du bâtiment par l'intermédiaire de la canalisation d'insufflation d'air 12, ce qui entraîne une augmentation de la température de la pièce P.

Selon une variante de ce mode de réalisation de l'invention, les moyens de commande sont agencés pour stopper l'alimentation électrique de la pompe des moyens d'humidification du dispositif de refroidissement par évaporation 5 uniquement lorsque l'hygrométrie mesurée par les troisièmes moyens de mesure 19 descend en dessous d'une valeur prédéterminée, et inversement.

De ce fait, en mode chauffage, le flux d'air traversant les filtres de refroidissement est humidifié avant d'air réchauffé par les moyens de chauffage. Ainsi, selon l'invention, il est possible d'insuffler de l'air chaud humide dans la pièce P.

Selon une autre variante de réalisation de l'invention, les moyens de commande sont agencés pour régler les volets d'obturation 9, 16 dans des positions intermédiaires entre leurs positions d'obturation et de libération. Avantageusement, les moyens de commande sont agencés pour régler de manière continue la position des volets d'obturation 9, 16 entre leurs positions d'obturation et de libération.

Selon cette variante de réalisation, les moyens de commande sont agencés pour permettre, en mode chauffage et en mode refroidissement, un mélange dans le caisson 3 d'un flux d'air provenant de l'extérieur du bâtiment avec un flux d'air provenant de la pièce P. De préférence, les moyens de commande sont agencés pour régler le taux d'air provenant de l'extérieur du bâtiment et le taux d'air provenant de la pièce P en réglant la position des volets d'obturation 9, 16.

Comme il va de soi, l'invention ne se limite pas à la seule forme d'exécution de cette installation de chauffage et de refroidissement, décrite ci-dessus à titre d'exemple, elle en embrasse au contraire toutes les variantes de réalisation.

## Revendications

1. Installation de chauffage et de refroidissement (2) d'un bâtiment, comprenant :
- un caisson (3) dans lequel est logé un dispositif de refroidissement par évaporation (5), le caisson comportant au moins une ouverture d'entrée d'air communiquant avec l'extérieur du bâtiment et équipée de premiers moyens d'obturation (9) mobiles entre une position d'obturation et une position de libération, le caisson comportant en outre une ouverture de reprise d'air (10) et une ouverture de sortie d'air (11), le dispositif de refroidissement par évaporation étant agencé pour diriger un flux d'air entrant par l'ouverture d'entrée d'air et/ou l'ouverture de reprise d'air vers l'ouverture de sortie d'air de telle sorte que ce flux d'air traverse le dispositif de refroidissement par évaporation avant d'être dirigé vers l'ouverture de sortie d'air,
- une canalisation d'insufflation d'air (12) raccordée à l'ouverture de sortie d'air (11) et agencée pour insuffler l'air provenant du caisson dans au moins une pièce (P) du bâtiment,
- une canalisation de reprise d'air (15) raccordée à l'ouverture de reprise d'air (10) du caisson et agencée pour rediriger l'air provenant de ladite pièce du bâtiment vers le caisson, la canalisation de reprise d'air ou l'ouverture de reprise d'air comportant des seconds moyens d'obturation (16) mobiles entre une position d'obturation et une position de libération,
- des moyens de chauffage (13) disposées dans la canalisation d'insufflation d'air (12),
- des moyens de commande (20) du dispositif de refroidissement par évaporation, des moyens de chauffage et des premiers et seconds moyens d'obturation, et des premiers moyens de mesure (17) agencés pour mesurer la température de l'air dans ladite pièce (P) du bâtiment, et des deuxièmes moyens de mesure (18) agencés pour mesurer la température de l'air au niveau des moyens de chauffage (13), et
- des troisièmes moyens de mesure d'hygrométrie (19) agencés pour mesurer l'hygrométrie dans ladite pièce (P) du bâtiment.

2. Installation selon la revendication 1, **caractérisée en ce que** les moyens de commande comportent un boîtier de commande (20) agencé pour commander le fonctionnement du dispositif de refroidissement par évaporation (5), des moyens de chauffage et des premiers et seconds moyens d'obturation (9, 16).

3. Installation selon l'une des revendications 1 à 2, **caractérisée en ce que** le dispositif de refroidissement par évaporation (5) comporte un ventilateur (6), au moins un élément de refroidissement et des moyens d'humidification de l'élément de refroidissement, le ventilateur étant agencé pour diriger le flux d'air entrant par l'ouverture d'entrée d'air et/ou l'ouverture de reprise d'air (10) vers l'ouverture de sortie d'air (11) de telle sorte que ce flux d'air traverse l'élément de refroidissement avant d'être dirigé vers l'ouverture de sortie d'air.

4. Installation selon les revendications 1 et 3, **caractérisée en ce que**, lorsque les moyens de chauffage fonctionnent, les moyens de commande sont agencés pour réguler la vitesse de rotation du ventilateur (6) en fonction de la température mesurée par les deuxièmes moyens de mesure (18).

5. Installation selon la revendication 4, **caractérisée en ce que** les moyens de commande sont agencés pour augmenter la vitesse de rotation du ventilateur (6) lorsque la température mesurée par les deuxièmes moyens de mesure (18) dépasse une valeur prédéterminée, et inversement.

6. Installation selon la revendication 1 ou l'une des revendications 1 à 5 en combinaison avec la revendication 1, **caractérisée en ce que** les moyens de commande sont agencés pour commander l'alimentation des moyens de chauffage lorsque la température mesurée par les premiers moyens de mesure (17) est inférieure à une valeur prédéterminée.

7. Installation selon l'une des revendications 1 à 6, **caractérisée en ce que** les moyens de commande sont agencés pour déplacer les premiers et seconds moyens d'obturation (9, 16) entre leurs positions d'obturation et de libération en fonction de la température mesurée par les premiers et/ou deuxièmes moyens de mesure (17, 18).

8. Installation selon la revendication 3 ou l'une des revendications 4 à 7 en combinaison avec la revendication 3, **caractérisée en ce que** les moyens de commande sont agencés pour commander le fonctionnement des moyens d'humidification en fonction de la température mesurée par les premiers moyens de mesure et/ou en fonction de l'hygrométrie mesurée par les moyens de mesure d'hygrométrie.

9. Installation selon l'une des revendications 1 à 8, **caractérisée en ce que** les moyens de chauffage comprennent au moins un échangeur thermique tubulaire (13) chauffé par l'intérieur à l'aide d'au moins un brûleur à gaz.

## Claims

1. An installation (2) for heating and cooling a building, comprising:
- a case (3) in which is housed an evaporation cooling device (5), the case including at least one air inflow aperture communicating with the outside of the building and equipped with first obturation means (9) movable between an obturation position and a clearing position, the case further including an air recycling aperture (10) and an air outflow aperture (11), the evaporation cooling device being laid out so as to direct an airflow entering through the air inflow aperture and/or the air recycling aperture towards the air outflow aperture so that this airflow passes through the evaporation cooling device before being directed towards the air outflow aperture,
- an air blowing duct (12) connected to the air outflow aperture (11) and laid out so as to blow the air from the case into at least one room (P) of the building,
- an air recycling duct (15) connected to the air recycling aperture (10) of the case and laid out so as to redirect the air from said room of the building towards the case, the air recycling duct or the air recycling aperture including second obturation means (16) movable between an obturation position and a clearing position,
- heating means (13) arranged in the air blowing duct (12),
- means (20) for controlling the evaporation cooling device, heating means and first and second obturation means, and first measurement means (17) laid out for measuring the temperature of the air in said room (P) of the building, and second measurement means (18) laid out for measuring the temperature of the air at the heating means (13), and
- third hygrometry measurement means (19) laid out for measuring the hygrometry in said room (P) of the building.

2. The installation according to claim 1, **characterized in that** the control means include a control box (20) laid out for controlling the operation of the evaporation cooling device (5), of the heating means and of the first and second obturation means (9, 16).

3. The installation according to one of claims 1 to 2, **characterized in that** the evaporation cooling device (5) includes a fan (6), at least one cooling member and means for humidifying the cooling member, the fan being laid out so as to direct the air flow entering through the air inflow aperture and/or the air recycling aperture (10) towards the air outflow aperture (11), so that this airflow passes through the cooling member before being directed towards the air outflow aperture.

4. The installation according to claims 1 and 3, **characterized in that**, when the heating means operate, the control means are laid out so as to regulate the speed of rotation of the fan (6) according to the temperature measured by the second measurement means (18).

5. The installation according to claim 4, **characterized in that** the control means are laid out so as to increase the speed of rotation of the fan (6) when the temperature measured by the second measurement means (18) exceeds a predetermined value, and vice versa.

6. The installation according to claim 1 or one of claims 1 to 5 in combination with claim 1, **characterized in that** the control means are laid out so as to control the powering of the heating means when the temperature measured by the first measurement means (17) is less than a predetermined value.

7. The installation according to one of claims 1 to 6, **characterized in that** the control means are laid out so as to displace the first and second obturation means (9, 16) between their obturation and clearing positions according to the temperature measured by the first and/or second measurement means (17, 18).

8. The installation according to claim 3 or one of claims 4 to the 7 in combination with claim 3, **characterized in that** the control means are laid out for controlling the operation of the humidification means according to the temperature measured by the first measurement means and/or according to the hygrometry measured by the hygrometry measurement means.

9. The installation according to one of claims 1 to 8, **characterized in that** the heating means comprise at least one tubular heat exchanger (13) heated from the inside by means of at least one gas burner.

## Patentansprüche

1. Heiz- und Kühlanlage (2) eines Gebäudes, die umfasst:
- einen Kasten (3), in dem eine Kühlvorrichtung durch Verdampfen (5) untergebracht ist, wobei der Kasten mindestens eine Lufteingangsöffnung aufweist, die mit der Außenwelt des Gebäudes kommuniziert und mit ersten Verschlussmitteln (9) ausgestattet ist, die zwischen einer Verschlussstellung und einer Freigabestellung bewegbar sind, wobei der Kasten weiterhin eine Luftwiederaufnahmeöffnung (10) und eine Luftausgangsöffnung (11) aufweist, wobei die Kühlvorrichtung durch Verdampfen ausgebildet ist, um einen durch die Lufteingangs- und/oder Luftwiederaufnahmeöffnung eingehenden Luftstrom derart zur Luftausgangsöffnung zu leiten, dass dieser luftstrom die Kühlvorrichtung durch Verdampfen durchquert, bevor er zur Luftausgangsöffnung geleitet wird,
- eine Lufteinblaskanalisation (12), die mit der Luftausgangsöffnung (11) verbunden ist und ausgebildet, um die Luft, die vom Kasten kommt, in mindestens einen Raum (P) des Gebäudes einzublasen,
- eine Luftwiederaufnahmekanalisation (15), die mit der Luftwiederaufnahmeöffnung (10) des Kastens verbunden ist und ausgebildet, um die Luft, die vom dem Raum des Gebäudes kommt, in Richtung des Kastens umzuleiten, wobei die Luftwiederaufnahmekanalisation oder Luftwiederaufnahmeöffnung zweite Verschlussmittel (16) aufweist, di zwischen einer Verschlussstellung und einer Freigabestellung bewegbar sind,
- Heizmittel (13), die in der Lufteinblaskanalisation (12) angeordnet sind,
- Steuermittel (20) der Kühlvorrichtung durch Verdampfen, Heizmittel und der ersten und zweiten Verschlussmittel, und erste Messmittel (17), die ausgebildet sind, um die Lufttemperatur in dem Raum (P) des Gebäudes zu messen, und zweite Messmittel (18), die ausgebildet sind, um die Lufttemperatur auf Ebene der Heizmittel (13) zu messen, und
- dritte Feuchtigkeitsmessmittel (19), die ausgebildet sind, um die Luftfeuchtigkeit in dem Raum (P) des Gebäudes zu messen.

2. Anlage nach Anspruch 1, **dadurch gekennzeichnet, dass** die Steuermittel einen Steuerschrank (20) aufweisen, der ausgebildet ist, um die Arbeit der Kühlvorrichtung durch Verdampfen (5), der Heizmittel und der ersten und zweiten Verschlussmittel (9, 16) zu steuern.

3. Anlage nach einem der Ansprüche 1 bis 2, **dadurch gekennzeichnet, dass** die Kühlvorrichtung durch Verdampfen (5) einen Ventilator (6), mindestens ein Kühlelement und Befeuchtungsmittel des Kühlelements aufweist, wobei der Ventilator ausgebildet ist, um den durch die Lufteingangsöffnung und/oder Luftwiederaufnahmeöffnung (10) eingehenden Luftstrom derart zur Luftausgangsöffnung (11) zu leiten, dass dieser Luftstrom das Kühlelement durchquert, bevor er zur Luftausgangsöffnung geleitet wird.

4. Anlage nach den Ansprüchen 1 und 3, **dadurch gekennzeichnet, dass**, wenn die Heizmittel arbeiten, die Steuermittel ausgebildet sind, um die Rotationsgeschwindigkeit des Ventilators (6) in Abhängigkeit von der von den zweiten Messmitteln (18) gemessenen Temperatur zu regulieren.

5. Anlage nach Anspruch 4, **dadurch gekennzeichnet, dass** die Steuermittel ausgebildet sind, um die Rotationsgeschwindigkeit des Ventilators (6) zu erhöhen, wenn die von den zweiten Messmitteln (18) gemessene Temperatur einen vorbestimmten Wert überschreitet, und umgekehrt.

6. Anlage nach Anspruch 1 oder einem der Ansprüche 1 bis 5 in Kombination mit Anspruch 1, **dadurch gekennzeichnet, dass** die Steuermittel ausgebildet sind, um die Versorgung der Heizmittel zu steuern, wen die von den ersten Messmitteln (17) gemessene Temperatur kleiner als ein vorbestimmter Wert ist.

7. Anlage nach einem der Ansprüche 1 bis 6, **dadurch gekennzeichnet, dass** die Steuermittel ausgebildet sind, um die ersten und zweiten Verschlussmittel (9, 16) zwischen ihren Verschluss- und Freigabestellungen in Abhängigkeit von der von den ersten und/oder zweiten Messmitteln (17, 18) gemessenen Temperatur zu verschieben.

8. Anlage nach Anspruch 3 oder einem der Ansprüche 4 bis 7 in Kombination mit Anspruch 3, **dadurch gekennzeichnet, dass** die Steuermittel ausgebildet sind, um die Arbeit der Befeuchtungsmittel in Abhängigkeit von der von den ersten Messmitteln gemessenen Temperatur und/oder in Abhängigkeit von der von den Luftfeuchtigkeitsmessmitteln gemessenen Feuchtigkeit zu steuern.

9. Anlage nach einem der Ansprüche 1 bis 8, **dadurch gekennzeichnet, dass** die Heizmittel mindestens einen röhrenförmigen Wärmetauscher (13) umfassen, der von innen mit Hilfe von mindestens einem Gasbrenner geheizt wird.
